# EUROPÄISCHE PATENTANMELDUNG

(11) **EP 3 404 249 A1**
(43) Veröffentlichungstag der Anmeldung: **21.11.2018**
(21) Anmeldenummer: 18157530.9
(22) Anmeldetag: 20.02.2018
(51) Int. Cl.: F02M 35/10, F16L 33/00, F15D 1/02

(54) **VERBINDUNGSANORDNUNG FÜR FLUIDLEITUNGEN**

(30) Priorität: 18.05.2017 DE 102017208439
(71) Anmelder: ContiTech MGW GmbH, 34346 Hannoversch-Münden (DE)
(72) Erfinder: Becker, Viktor, 37085 Göttingen (DE); Hensel, Knut, 04655 Kohren-Sahlis (DE); Fassl, Holger, 34379 Calden (DE); Braam, Axel, 34346 Hannoversch-Münden (DE)
(74) Vertreter: Finger, Karsten

(57) **Zusammenfassung**

Die Erfindung betrifft eine Verbindungsanordnung für Fluidleitungen, aufweisend einen Anschlussstutzen (1), Stützrippen (6, 10, 14, 16, 17, 18, 20) und ein Ladeluftrohr. Der Erfindung liegt die Aufgabe zugrunde, die Stützrippen (6, 10, 14, 16, 17, 18, 20) derart auszugestalten, dass die Strömung (11) eines durch die Fluidleitung strömenden Fluids auf vorbestimmte Weise beeinflussbar ist. Diese Aufgabe wird dadurch gelöst, dass die Stützrippen (6, 10, 14, 16, 17, 18, 20) in ihrer axialen Ausdehnung gegenüber der Strömungsrichtung (11) eines strömenden Fluids einen Anströmwinkel (9, 9a- 9e) aufweisen, der zwischen 135° und 45° liegt. Die Stützrippen (6, 10, 14, 16, 17, 18, 20) können auch einen sich ändernden Querschnitt (19)aufweisen, gekrümmt oder in Umfangsrichtung der Stützhülse (1) ungleichmäßig verteilt sein.

## Beschreibung

Die Erfindung betrifft eine Verbindungsanordnung für Fluidleitungen, aufweisend einen Anschlussstutzen, Stützrippen und ein Ladeluftrohr.

Ladeluftrohre werden aufgrund der einfachen Herstellbarkeit und des geringen Gewichts heute oft als Blasformteil ausgeführt. Dabei sind auch geringe Wandstärken erreichbar.

Problematisch sind diese geringen Wandstärken im Bereich der Anschlüsse, da die Festigkeit der Rohrwand meist nicht ausreicht, um weitere Fluidleitungen an das Rohr anzuschließen. Dies geschieht meist durch das Aufschieben eines Schlauches auf das Endstück des Ladeluftrohres und anschließender Verklemmung mit Spannhülsen oder Schellen. Ohne Verstärkung des Endes des Ladeluftrohres würde dieses bei der Verklemmung zusammengedrückt.

Die Endstücke sind daher meist mit einer metallischen Stützhülse verstärkt. Dies verursacht teilweise erheblichen Aufwand, da das Endstück des Ladeluftrohres auf ein definiertes Maß aufgespielt werden muss, um die metallene Hülse in das Innere des Rohres einpressen zu können. Da das thermische Verhalten der Kunststoffe des Ladeluftrohres und des Metalles der Stützhülse unterschiedlich sind, muss die Hülse auch gegen ein herausfallen aus dem Rohrende gesichert sein. Dazu kann beispielsweise der Kunststoff am Rohrende nochmals aufgeschmolzen und nach innen gedrückt werden. So entsteht eine Herausfallsperre.

Neben dem hohen Fertigungsaufwand ist die Stützhülse auch relativ schwer und teuer.

Eine Möglichkeit, diese Problematik zu umgehen, ist, am betreffenden Ende der blasgeformten Fluidleitung ein separates Bauteil anzuordnen, welches mit der Fluidleitung fest und dicht verbindbar ist. Ein derartiges Bauteil kann beispielsweise als Kunststoff - Spritzguss - Hülse mit inneren Stützrippen ausgebildet sein, welches. Die Stützrippen dienen dabei der radialen Verstärkung der Hülse und liegen dabei im Medienstrom, so das ein Einfluss auf die Strömung des durch die Fluidleitung strömenden Fluids unvermeidbar ist. Beispielsweise durch Reibschweißen mit der Fluidleitung verbindbar ist.

Der Erfindung liegt die Aufgabe zugrunde, die Stützrippen derart auszugestalten, dass die Strömung eines durch die Fluidleitung strömenden Fluids auf vorbestimmte Weise beeinflussbar ist.

Diese Aufgabe wird dadurch gelöst, dass die Stützrippen in ihrer axialen Ausdehnung gegenüber der Strömungsrichtung eines strömenden Fluids einen Anströmwinkel aufweisen, der zwischen 135° und 45° liegt.

In einer Weiterbildung der Erfindung weisen die Stützrippen einen Anströmwinkel auf, der über die radiale Ausdehnung der Stützrippen verschiedene Werte aufweist.

Mittels dieses Anströmwinkel ist es möglich, die Verwirbelung des strömenden Fluids beim Auftreffen auf die Rippen gezielt zu beeinflussen. So sind beispielsweise unerwünschte Verwirbelungen verringerbar.

In einer Weiterbildung der Erfindung weisen die Stützrippen einen in Strömungsrichtung sich ändernden Querschnitt auf.

Durch diese Ausgestaltung ist es möglich, ähnlich wie bei einer Flugzeugtragfläche, im Fluidstrom Geschwindigkeitsgradienten zu erzeugen.

In einer Weiterbildung der Erfindung sind die Stützrippen in Strömungsrichtung gekrümmt.

Diese Ausführungsform ähnelt einem Propeller. Damit sind in dem strömenden Fluid Rotation erzeugbar oder beeinflussbar.

In einer Weiterbildung der Erfindung sind die Stützrippen in Umfangsrichtung ungleichmäßig verteilt.

Mit einer derartigen Anordnung lassen sich auch ungleichmäßig strömende Medien gut beeinflussen.

In einer Weiterbildung der Erfindung ist der Anschlussstutzen durch Kunststoff-Spritzgießen hergestellt.

Das Kunststoff-Spritzgießen ist ein günstiger und sicherer Herstellprozess, der vielfältige Formgebung ermöglicht und eine hohe Maßgenauigkeit gewährleistet.

Anhand der Zeichnung wird ein Beispiel der Erfindung näher erläutert es zeigt
Fig. 1 einen Anschlussstutzen mit gleichmäßig verteilten Stützrippen und einem Anströmwinkel von 90°,
Fig. 2a-2c prinzipielle Schnittdarstellungen von Anschlussstutzen mit unterschiedlichen Anströmwinkel der Stützrippen,
Fig. 3 eine prinzipielle Darstellung eines Anschlussstutzens mit Propeller förmlich angeordneten Stützrippen,
Fig. 4 einen Anschlussstutzen mit Stützrippen mit nicht konstantem Querschnitt und
Fig. 5 eine prinzipielle Querschnittsdarstellung eines Anschlussstutzens mit ungleichmäßig verteilten Stützrippen.

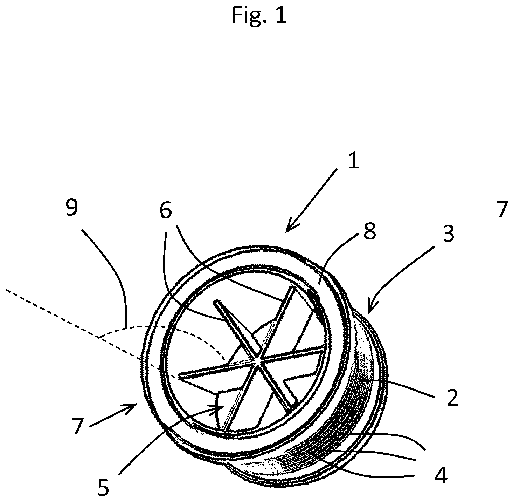

In Fig. 1 ist ein erfindungsgemäßer Anschlussstutzen 1 gezeigt. Der Anschlussstutzen 1 ist aus thermoplastischem Kunststoff im Spritzgussverfahren hergestellt.

Der Anschlussstutzen einst weist einen zylindrischen Grundkörper 2 auf, der auf seiner äußeren Mantelfläche 3 eine Mehrzahl von Rillen 4 aufweist. Die Rillen 4 dienen dazu, die Befestigung weiterer, hier nicht gezeigter Fluidleitungen auf dem Anschlussstutzen sicherer zu gestalten. In seiner inneren Durchlassöffnung 5 weist Anschlussstutzen 1 radial nach außen weisende, quasi sternförmig angeordnete Stützrippen 6 auf. Die Stützrippen 6 dienen der Versteifung des Grundkörpers 2. An seinem ersten axialen Ende 7 weist der Anschlussstutzen 1 eine Anschweißfläche 8 auf, die umlaufend um das erste Ende 7 herum angeordnet ist und axial plan ausgerichtet ist.

Die Stützrippen 6 weisen einen Anströmwinkel 9 von 90° auf.

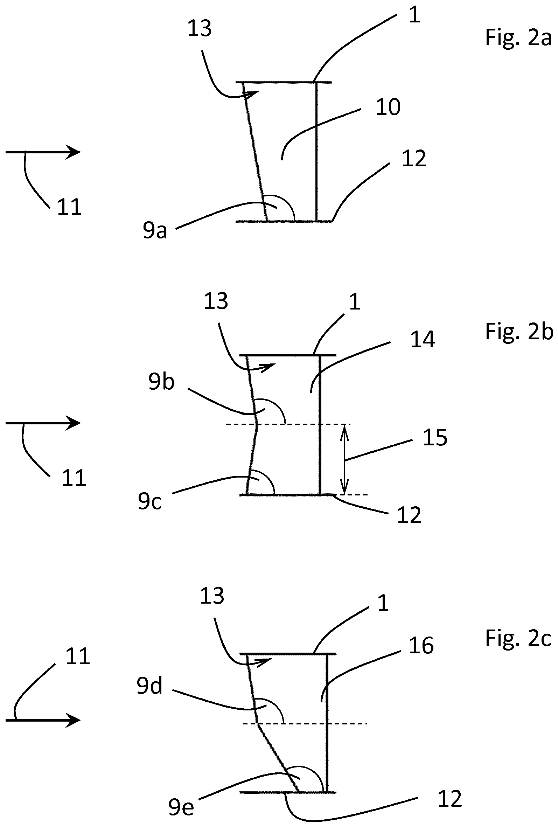

In den Figuren 2a-2c sind verschiedene Anordnungen von Stützrippen des Anschlussstutzens 1 gezeigt, wobei jeweils nur eine Stützrippen als Draufsicht gezeigt ist.

Fig. 2a zeigt eine Stützrippe 10 als prinzipielle Darstellung, die in Strömungsrichtung 11 eines nicht gezeigten Fluidstroms einen Anströmwinkel 9a aufweist, der größer als 90° ist. Der Fluidstrom bzw. die Strömungsrichtung des Fluidstroms ist hier durch den Pfeil 11 symbolisiert, von der Stützhülse 1 selbst ist hier nur ein Ausschnitt prinzipiell dargestellt. Der Anströmwinkel 9a ist von einer imaginären Mittelachse 12 der nicht gezeichneten Strömung bis zum radialen Ende 13 der Stützrippe 10 konstant.

Durch einen Anströmwinkel 9a , der größer als 90° ist, ist die Aufprallcharakteristik der Strömung gegenüber Stützrippen mit senkrechten Stützrippen, d.h. mit Anströmwinkel 90°, verändert. Je flacher, also größer der Anströmwinkel 9a ist, desto weicher wird der Aufprall des Fluids auf die Stützrippen 10 sein.

In Fig. 2b ist eine Stützrippe 14 gezeigt, die über die radiale Ausdehnung der Rippe 14 verschiedene Anströmwinkel 9b und 9c aufweist. Am Außenrand der Rippe 14 ist der erste Anströmwinkel 9b größer als 90°, bis zu einem vorbestimmten radialen Abstand 15 von der imaginären Mittelachse 12 der nicht gezeigten Strömung ist der zweite Anströmwinkel 9c kleiner als 90°.

In Fig. 2c ist eine Stützrippen 16 gezeigt, deren Anströmwinkel 9d und 9e beide größer sind als 90°, wobei der Anströmwinkel 9e größer ist, als der Anströmwinkel 9d.

Durch diese Anordnungen ist es möglich, Unterschiede bei der Strömungsgeschwindigkeit in den Außenbereichen der Strömung gegenüber dem Strömungszentrum zu berücksichtigen.

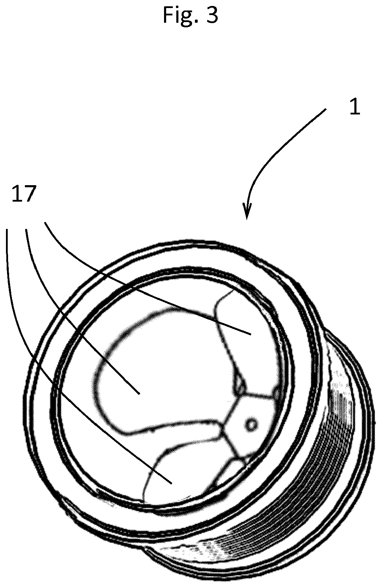

Fig. 3 zeigt einen Anschlussstutzen 1 mit propellerartig angeordneten Stützrippen 17.

Mit dieser Anordnung ist eine Rotation der Strömung einstellbar.

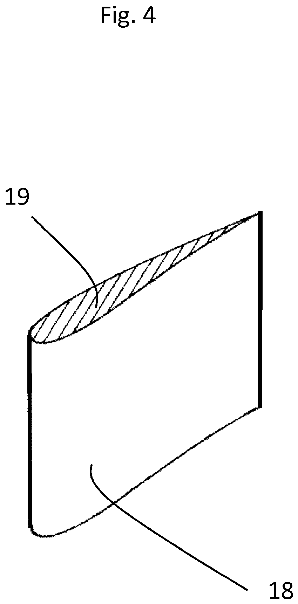

In Fig. 4 ist eine Stützrippe 18 in einem Teillängsschnitt gezeigt. Die Stützrippe 18 weist eine tragflügelähnliche Kontur 19 auf, mit der es möglich ist, die Strömungsgeschwindigkeit des strömenden Fluids an den Stützrippen 18 gezielt zu beeinflussen.

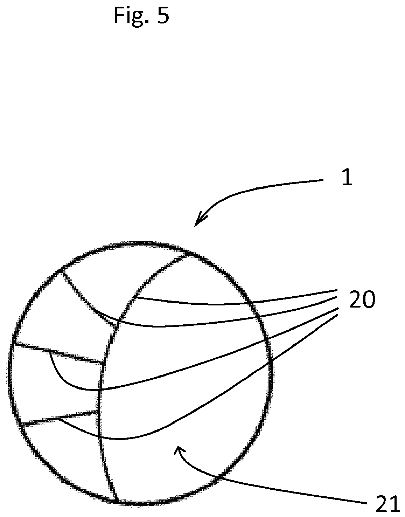

In Fig. 5 ist eine Stützhülse 1 prinzipiell im Querschnitt gezeigt, deren Stützrippen 20 über den Umfang des Strömungsquerschnitts 21 der Stützhülse 1 ungleichmäßig verteilt sind.

Dadurch sind die Strömungsverhältnisse in der Stützhülse 1 über ihren Strömungsquerschnitt 21 unterschiedlich beeinflussbar.

### Bezugszeichenliste

### (Teil der Beschreibung)

- 1: Anschlussstutzen
- 2: Grundkörper des Anschlussstutzens 1
- 3: Mantelfläche des Grundkörpers 2
- 4: Rillen auf der Mantelfläche 3
- 5: Durchlassöffnung des Anschlussstutzens 1
- 6, 10, 14, 16, 17, 18, 20: Stützrippen
- 7: Erstes axiales Ende des Anschlussstutzens 1
- 8: Anschweissfläche
- 9, 9a - 9e: Anströmwinkel
- 11: Strömung, Strömungsrichtung
- 12: imaginäre Mittelachse der Strömung 11
- 13: radiales Ende der Stützrippen
- 15: vorbestimmter radialer Abstand von der imaginären Mittelachse 12 der Strömung 11
- 19: Kontur, Querschnitt der Stützrippen 18
- 21: Strömungsquerschnitt der Stützhülse 1

## Patentansprüche

1. Verbindungsanordnung für Fluidleitungen, aufweisend einen Anschlussstutzen (1), Stützrippen (6, 10, 14, 16, 17, 18, 20) und ein Ladeluftrohr, **dadurch gekennzeichnet, dass** die Stützrippen (6, 10, 14, 16, 17, 18, 20) in ihrer axialen Ausdehnung gegenüber der Strömungsrichtung (11) eines strömenden Fluids einen Anströmwinkel (9, 9a- 9e) aufweisen, der zwischen 135° und 45° liegt.

2. Verbindungsanordnung nach Anspruch 1, **dadurch gekennzeichnet, dass** die Stützrippen (6, 10, 14, 16, 17, 18, 20) einen Anströmwinkel (9, 9a - 9e) aufweisen, der über die radiale Ausdehnung der Stützrippen (6, 10, 14, 16, 17, 18, 20) verschiedene Werte aufweist.

3. Verbindungsanordnung nach Anspruch 1 oder 2, **dadurch gekennzeichnet, dass** die Stützrippen (6, 10, 14, 16, 17, 18, 20) einen in Strömungsrichtung (11) sich ändernden Querschnitt (19) aufweisen.

4. Verbindungsanordnung nach mindestens einem der vorstehenden Ansprüche, **dadurch gekennzeichnet, dass** die Stützrippen (6, 10, 14, 16, 17, 18, 20) in Strömungsrichtung (11) gekrümmt sind.

5. Verbindungsanordnung nach mindestens einem der vorstehenden Ansprüche, **dadurch gekennzeichnet, dass** die Stützrippen (6, 10, 14, 16, 17, 18, 20) in Umfangsrichtung ungleichmäßig verteilt sind.

6. Verbindungsanordnung nach Anspruch 1, **dadurch gekennzeichnet, dass** der Anschlussstutzen (1) durch Kunststoff-Spritzgießen hergestellt ist.
